# EUROPEAN PATENT APPLICATION

(11) **EP 4 682 974 A2**
(43) Date of publication of application: **21.01.2026**
(21) Application number: 25190319.1
(22) Date of filing: 17.07.2025
(51) Int. Cl.: H01M 4/134, H01M 4/38, H01M 4/62

(54) **ANODE FOR LITHIUM SECONDARY BATTERY AND LITHIUM SECONDARY BATTERY INCLUDING THE SAME**

(30) Priority: 17.07.2024 KR 20240094416
(71) Applicant: SK On Co., Ltd., Seoul 03161 (KR)
(72) Inventor: KIM, Jae Ram, 34124 Daejeon (KR); PARK, So Hyun, 34124 Daejeon (KR); BAE, Sang Won, 34124 Daejeon (KR); BAE, Ji Hee, 34124 Daejeon (KR); YEON, Jeong Seok, 34124 Daejeon (KR); LEE, Jae Yeong, 34124 Daejeon (KR)
(74) Representative: Stolmár & Partner Patentanwälte PartG mbB

(57) **Abstract**

An anode according to embodiments of the present disclosure includes an anode current collector, a first anode active material layer which is disposed on at least one surface of the anode current collector, and includes a first silicon-based active material and a first binder including a first rubber-based binder and a first cellulose-based binder. The anode includes a second anode active material layer which is disposed on the first anode active material layer, and includes a second silicon-based active material and a second binder including a second rubber-based binder and a second cellulose-based binder. A weight ratio of the first cellulose-based binder to the first rubber-based binder in the first binder is lower than a weight ratio of the second cellulose-based binder to the second rubber-based binder in the second binder.

## Description

### BACKGROUND

### 1. Field

The embodiments of the present application relate to an anode for a lithium secondary battery and a lithium secondary battery including the same.

### 2. Description of the Related Art

A secondary battery is a battery that can be repeatedly charged and discharged, and is widely used as a power source for portable electronic communication devices such as a laptop computer and a mobile phone with the advancement of information and communication technology and display industries. In addition, recently, a battery pack including the secondary batteries has also been developed and applied as a power source for eco-friendly vehicles such as an electric vehicle.

There are various types of secondary batteries, but lithium secondary batteries with high operating voltage, fast charging speed, and high power density are mainly used. Depending on the type of cathode material, the lithium secondary batteries may be classified into lithium secondary batteries using NCM (nickel, cobalt and manganese), NCA (nickel, cobalt and aluminum), LFP (lithium, iron and phosphorus), etc., and depending on the type of anode material, they may be classified into lithium secondary batteries using natural graphite, artificial graphite, graphite-based materials, or metal-based materials.

Anode materials commonly used in lithium secondary batteries include graphite and silicon, which are known for their stability and energy characteristics. Graphite is characterized by high stability, while silicon is characterized by high energy density.

Recently, as the application range of lithium secondary batteries has expanded, the demand for high energy density, high stability, and fast charging has increased. For example, batteries used in electric vehicles require higher capacities than those of conventional lithium secondary batteries. To satisfy the above-described requirements, attempts have been made to use a combination of anode materials. However, it is difficult to control the high volume expansion rate of silicon, which may cause cracks to form in the active material due to reactions with lithium during charging and discharging. As a result, the cycle life and fast-charging performance of the lithium secondary battery may deteriorate significantly.

### SUMMARY

An embodiment of the present disclosure provides an anode for a secondary battery with improved capacity and cycle life characteristics.

Another embodiment of the present disclosure provides a lithium secondary battery including the anode for a lithium secondary battery with improved capacity and cycle life characteristics.

An anode for a lithium secondary battery according to embodiments of the present disclosure includes: an anode current collector; a first anode active material layer which is disposed on at least one surface of the anode current collector, and includes a first silicon-based active material and a first binder including a first rubber-based binder and a first cellulose-based binder; and a second anode active material layer which is disposed on the first anode active material layer, and includes a second silicon-based active material and a second binder including a second rubber-based binder and a second cellulose-based binder. A weight ratio of the first cellulose-based binder to the first rubber-based binder in the first binder is lower than a weight ratio of the second cellulose-based binder to the second rubber-based binder in the second binder.

According to exemplary embodiments, a content of the first rubber-based binder based on the total weight of the first binder may be greater than or equal to a content of the first cellulose-based binder based on the total weight of the first binder.

According to exemplary embodiments, the weight ratio of the first cellulose-based binder to the first rubber-based binder in the first binder may be 0.7 or less.

According to exemplary embodiments, the weight ratio of the first cellulose-based binder to the first rubber-based binder in the first binder may be 0.3 to 0.6.

According to exemplary embodiments, a content of the second rubber-based binder based on the total weight of the second binder may be lower than a content of the second cellulose-based binder based on the total weight of the second binder.

According to exemplary embodiments, the weight ratio of the second cellulose-based binder to the second rubber-based binder in the second binder may be 1.0 or more.

According to exemplary embodiments, the weight ratio of the second cellulose-based binder to the second rubber-based binder in the second binder may be 1.2 to 2.4.

According to exemplary embodiments, the weight ratio of the first and second cellulose-based binders to the first and second rubber-based binders based on the total weight of the first binder and the second binder may be 0.77 to 0.87.

According to exemplary embodiments, the first rubber-based binder and the second rubber-based binder may include at least one rubber-based binder selected from styrene-butadiene rubber (SBR), acrylonitrile-butadiene rubber, hydrous-styrene-butadiene rubber, hydrous-acrylonitrile-butadiene rubber, and styrene-isoprene rubber, and the first cellulose-based binder and the second cellulose-based binder may include at least one cellulose-based binder selected from carboxymethyl cellulose (CMC), starch, and hydroxy propyl cellulose.

According to exemplary embodiments, the first silicon-based active material and the second silicon-based active material may each include a silicon-carbon composite.

According to exemplary embodiments, a content of the first silicon-based active material based on the total weight of the first anode active material layer may be lower than a content of the second silicon-based active material based on the total weight of the second anode active material layer.

According to exemplary embodiments, the content of the first silicon-based active material based on the total weight of the first anode active material layer may be 3 wt% to 10 wt%.

According to exemplary embodiments, the content of the second silicon-based active material based on the total weight of the second anode active material layer may be 13 wt% to 20 wt%.

According to exemplary embodiments, the total content of the first and second silicon-based active materials based on the total weight of the first anode active material layer and the second anode active material layer may be 8 wt% or more.

A lithium secondary battery may include: the anode according to the above-described embodiments; and a cathode disposed opposite to the anode for a lithium secondary battery.

The anode according to exemplary embodiments of the present disclosure may include a silicon-based active material. The silicon-based active material may include a silicon-carbon composite. The energy density of the lithium secondary battery may be increased by including the silicon-carbon composite.

According to exemplary embodiments, the anode may include a first anode active material layer and a second anode active material layer having different contents of a binder. The binder includes two or more types of binders, and the contents or ratios of the respective binders may be controlled. By adjusting the contents or ratios of the binders, crack generation in the silicon-based active material of the anode may be suppressed. Therefore, the fast-charging performance and cycle life characteristics of the lithium secondary battery may be improved.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a schematic cross-sectional view illustrating an anode for a lithium secondary battery according to exemplary embodiments; and
FIGS. 2 and 3 are schematic plan and cross-sectional views illustrating a lithium secondary battery according to exemplary embodiments.

### DETAILED DESCRIPTION

According to embodiments of the present disclosure, there is provided an anode for a lithium secondary battery which includes an anode active material layer having a multi-layer structure including a first anode active material layer and a second anode active material layer, each containing a silicon-based active material. In addition, a lithium secondary battery including the anode and a cathode disposed opposite to the anode is also provided.

As used herein, the term "graphite-based active material" may refer to an active material containing a carbon element and not containing a silicon element.

As used herein, the term "silicon-based active material" may refer to an active material containing a silicon element.

Hereinafter, the present disclosure will be described in more detail with reference to the drawings and embodiments. However, the following drawings and embodiments are provided to illustrate preferred embodiments of the present disclosure, and to help better understand the technical spirit of the present disclosure along with the above description. Therefore, the present disclosure should not be construed as being limited to the contents described in the drawings and embodiments.

### <Anode for lithium secondary battery>

An anode for a lithium secondary battery according to embodiments of the present disclosure includes: an anode current collector; a first anode active material layer formed on at least one surface of the anode current collector; and a second anode active material layer formed on the first anode active material layer.

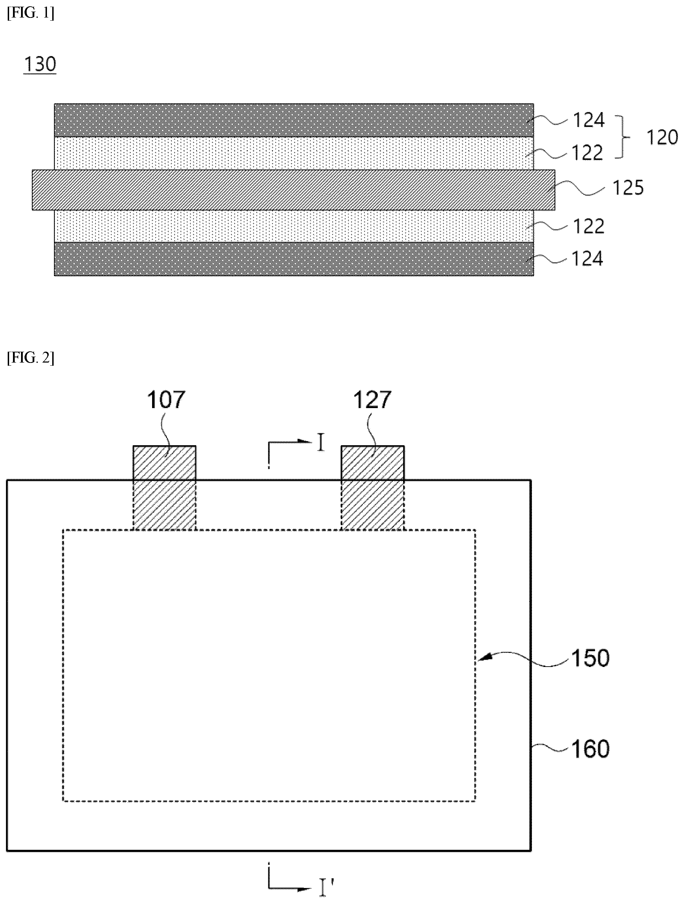

Referring to FIG. 1, an anode 130 may include an anode current collector 125 and an anode active material layer 120 formed on the anode current collector 125.

For example, the anode current collector 125 may include a metal having high conductivity, strong adhesion strength with an anode slurry, and causing no chemical change within the operating voltage range of the secondary battery. Specifically, the anode current collector 125 may include copper, stainless steel, aluminum, nickel, titanium, or an alloy thereof. Alternatively, the anode current collector 125 may include copper or stainless steel having a surface treated with carbon, nickel, titanium, or silver.

The anode current collector 125 may have a thickness of 3 µm to 500 µm, and may include a structure on its surface to increase adhesion strength with the anode active material.

The anode active material layer 120 formed on at least one surface of the anode current collector 125 may include a first anode active material layer 122 and a second anode active material layer 124.

The first anode active material layer 122 may be in contact with the anode current collector 125 on at least one surface. The second anode active material layer 124 may be formed on an upper surface of the first anode active material layer 122. Accordingly, the anode active material layer 120 may include a multi-layer structure.

According to exemplary embodiments, the first anode active material layer 122 and the second anode active material layer 124 may each include a carbon-based active material.

The carbon-based active material may include natural graphite or artificial graphite. The median particle diameter of the carbon-based active material may be 0.1 µm to 50 µm.

In some embodiments, the carbon-based active material may include artificial graphite. The use of artificial graphite may improve the cycle life characteristics and stability of the secondary battery.

In some embodiments, the carbon-based active material may include low-orientation artificial graphite.

For example, the crystallite size of the carbon-based active material may be measured by analyzing the full width at half maximum (FWHM) using X-ray diffraction (XRD) analysis, and the low-orientation artificial graphite may be identified based on the full width at half maximum. For example, the low-orientation artificial graphite may include artificial graphite having an I(004)/I(110) intensity ratio of 3.1 or less, as determined by XRD analysis, where 1(004) and I(110) represent the maximum peak intensities of the (004) and (110) planes, respectively.

In some embodiments, the second anode active material layer 124 may include low-orientation artificial graphite as a carbon-based active material.

For example, the first anode active material layer 122 may include artificial graphite having an I(004)/I(110) ratio of greater than 3.1, as determined by XRD analysis, and the second anode active material layer 124 may include artificial graphite having an I(004)/I(110) ratio of 3.1 or less, as determined by XRD analysis. The low-orientation artificial graphite included in the second anode active material layer 124 may suppress the volume change of the silicon-based active material, thereby improving the cycle life characteristics of the lithium secondary battery.

According to exemplary embodiments, the first anode active material layer 122 and the second anode active material layer 124 may each include a silicon-based active material.

For example, the first anode active material layer 122 may include a first silicon-based active material, and the second anode active material layer 124 may include a second silicon-based active material.

The silicon-based active material may include silicon (Si), a silicon alloy, SiOx (0<x<2) containing a lithium or magnesium compound, or a silicon-carbon composite. For example, the SiOx containing a lithium or magnesium compound may include SiOx that has been pretreated with lithium or magnesium.

In some embodiments, the silicon-based active material may include a silicon-carbon composite.

For example, the silicon-carbon composite may include silicon carbide or silicon-carbon particles having a core-shell structure.

In one embodiment, the silicon-carbon composite may include silicon-based active material particles and a carbon coating layer formed on the surface of the silicon-based active material particles. The carbon coating layer may prevent the silicon-based active material particles from contacting moisture in the air and/or water present in the anode slurry. Therefore, a decrease in the discharge capacity of the secondary battery may be suppressed.

For example, the carbon coating layer may be at least one selected from the group consisting of amorphous carbon, carbon nanotubes, carbon nanofibers, graphite, graphene, graphene oxide and reduced graphene oxide.

In some embodiments, the silicon-based active material may not include SiOx (0<x<2). By excluding SiOx from the silicon-based active material, changes in the anode active material layer 120 due to variations in binder content may be more effectively suppressed.

In some embodiments, the silicon-based active material may be substantially composed of the silicon-carbon composite.

According to exemplary embodiments, the first anode active material layer 122 and the second anode active material layer 124 may include the same type of silicon-based active material. For example, the first anode active material layer 122 and the second anode active material layer 124 may each include a silicon-based active material including a silicon-carbon composite.

The silicon-based active material of the same type may refer to a silicon-based active material having properties that are generally recognized as similar in terms of particle size, shape, and morphology, and including the same type of atoms. By including the same type of silicon-based active material, the bonding strength provided by the binder may be improved.

According to exemplary embodiments, the content of the first silicon-based active material included in the first anode active material layer 122 and the content of the second silicon-based active material included in the second anode active material layer 124 may be different.

For example, the content of the first silicon-based active material based on the total weight of the first anode active material layer 122 may be lower than the content of the second silicon-based active material based on the total weight of the second anode active material layer 124.

When the content of the first silicon-based active material included in the first anode active material layer 122 is lower than the content of the second silicon-based active material included in the second anode active material layer 124, lithiation may be promoted at the surface of the anode, thereby implementing the high-capacity characteristics of the silicon-based active material.

According to exemplary embodiments, the content of the first silicon-based active material based on the total weight of the first anode active material layer 122 may be 1% by weight ("wt%") to 10 wt%, 2 wt% to 10 wt%, 3 wt% to 10 wt%, or 4 wt% to 8 wt%.

According to exemplary embodiments, the content of the second silicon-based active material based on the total weight of the second anode active material layer 124 may be 10 wt% to 25 wt%, 10 wt% to 22 wt%, 11 wt% to 20 wt%, 12 wt% to 18 wt%, or 14 wt% to 18 wt%.

Within the above range, deterioration in cycle life characteristics may be prevented even during rapid charging and discharging of the lithium secondary battery, and the bonding strength between the anode active material layers may be improved through control of the binder content as described below.

According to exemplary embodiments, the total content of silicon-based active materials based on the total weight of the anode active material layer 120 may be 8 wt% or more, 8 wt% to 16 wt%, 8 wt% to 14 wt%, or 8 wt% to 11 wt%.

Even if the contents of the first silicon-based active material included in the first anode active material layer 122 and the second silicon-based active material included in the second anode active material layer 124 are individually controlled, the total content of the first and second silicon-based active materials based on the total weight of the anode active material layer 120 may fall within the above range, thereby improving the capacity characteristics of the lithium secondary battery.

According to exemplary embodiments, the first anode active material layer 122 and the second anode active material layer 124 may each include two or more anode binders.

The anode binders may include a rubber-based binder including styrene-butadiene rubber (SBR), acrylonitrile-butadiene rubber, hydrous-styrene-butadiene rubber, hydrous-acrylonitrile-butadiene rubber, styrene-isoprene rubber, etc.; a cellulose-based binder including carboxymethyl cellulose (CMC), starch, hydroxy propyl cellulose, etc.; a polyacrylic acid-based binder; a poly(3,4-ethylenedioxythiophene) (PEDOT)-based binder, etc.

According to exemplary embodiments, the first anode active material layer 122 may include a first binder including a first rubber-based binder and a first cellulose-based binder. According to exemplary embodiments, the second anode active material layer 124 may include a second binder including a second rubber-based binder and a second cellulose-based binder.

According to some embodiments, the first rubber-based binder and the second rubber-based binder may include at least one rubber-based binder selected from styrene-butadiene rubber (SBR), acrylonitrile-butadiene rubber, hydrous-styrene-butadiene rubber, hydrous-acrylonitrile-butadiene rubber, and styrene-isoprene rubber. According to some embodiments, the first rubber-based binder and the second rubber-based binder may be of different types or the same type. According to some embodiments, the first rubber-based binder and the second rubber-based binder may be styrene-butadiene rubber (SBR).

According to some embodiments, the first cellulose-based binder and the second cellulose-based binder may include one or more cellulose-based binders selected from carboxymethyl cellulose (CMC), starch, and hydroxypropyl cellulose. According to some embodiments, the first cellulose-based binder and the second cellulose-based binder may be of different types or the same type. According to some embodiments, the first cellulose-based binder and the second cellulose-based binder may include carboxymethyl cellulose (CMC).

According to exemplary embodiments, the weight ratio of the first cellulose-based binder to the first rubber-based binder in the first binder may be different from the weight ratio of the second cellulose-based binder to the second rubber-based binder in the second binder.

According to exemplary embodiments, the weight ratio of the first cellulose-based binder to the first rubber-based binder in the first binder may be lower than the weight ratio of the second cellulose-based binder to the second rubber-based binder in the second binder.

The ratio of the rubber-based binder to the cellulose-based binder included in each of the first binder and the second binder may be adjusted to increase the adhesion strength between the anode active material layers and the adhesion strength between the anode current collector and the anode active material layer. Accordingly, the cycle life characteristics of the lithium secondary battery may be improved. In addition, the shrinkage and expansion of the silicon-based active material may be suppressed even during fast charging and discharging, thereby improving the fast-charging cycle life characteristics of the lithium secondary battery.

According to exemplary embodiments, the content of the first rubber-based binder based on the total weight of the first binder may be greater than or equal to the content of the first cellulose-based binder based on the total weight of the first binder.

According to exemplary embodiments, the weight ratio of the first cellulose-based binder to the first rubber-based binder in the first binder may be 0.7 or less.

In some embodiments, the weight ratio of the first cellulose-based binder to the first rubber-based binder in the first binder may be 0.3 to 0.6, 0.4 to 0.6, or 0.4 to 0.55.

According to exemplary embodiments, the content of the first rubber-based binder based on the total weight of the first anode active material layer 122 may be 1.5 wt% to 3.0 wt%, 1.6 wt% to 2.8 wt%, 1.7 wt% to 2.6 wt%, or 1.8 wt% to 2.6 wt%.

According to exemplary embodiments, the content of the first cellulose-based binder based on the total weight of the first anode active material layer 122 may be 0.5 wt% to 1.8 wt%, 0.6 wt% to 1.7 wt%, 0.7 wt% to 1.6 wt%, or 0.8 wt% to 1.5 wt%.

The first anode active material layer 122 including the binders within the above content range may be positioned adjacent to the anode current collector 125, thereby alleviating volume changes caused by the intercalation and deintercalation of lithium ions. Accordingly, the cycle life characteristics of the lithium secondary battery may be improved.

According to exemplary embodiments, the content of the second rubber-based binder in the second binder may be less than the content of the second cellulose-based binder based on the total weight of the second binder.

According to exemplary embodiments, the weight ratio of the second cellulose-based binder to the second rubber-based binder in the second binder may be 1.0 or more.

In some embodiments, the weight ratio of the second cellulose-based binder to the second rubber-based binder in the second binder may be 1.0 to 2.8, 1.1 to 2.6, 1.2 to 2.4, 1.4 to 2.3, or 1.6 to 2.2.

According to exemplary embodiments, the content of the second rubber-based binder based on the total weight of the second anode active material layer 124 may be 0.2 wt% to 1.2 wt%, 0.3 wt% to 1.1 wt%, 0.3 wt% to 0.9 wt%, or 0.4 wt% to 0.8 wt%.

According to exemplary embodiments, the content of the second cellulose-based binder based on the total weight of the second anode active material layer 124 may be 0.5 wt% to 2.0 wt%, 0.6 wt% to 1.8 wt%, 0.7 wt% to 1.6 wt%, or 0.8 wt% to 1.5 wt%.

The second anode active material layer 124 including binders within the above content range may improve the bonding strength between the anode active materials. Therefore, the long-term cycle life characteristics and the fast-charging cycle life characteristics of the lithium secondary battery may be improved.

According to exemplary embodiments, the weight ratio of the first and second cellulose-based binders to the first and second rubber-based binders based on the total weight of the first binder and the second binder may be 0.7 to 0.9, 0.74 to 0.88, or 0.77 to 0.87.

Even if the weight or weight ratio of the binder included in each of the first binder and the second binder is controlled, the weight ratio of the first and second rubber-based binders to the first and second cellulose-based binders, based on the total weight of the first binder and the second binder, may be controlled within the above range. Accordingly, the long-term cycle life characteristics and the fast-charging cycle life characteristics of the lithium secondary battery may be achieved.

In some embodiments, the anode 130 may include the anode active material layer 120 formed by applying (coating) the above-described anode slurry to at least one surface of the anode current collector 125, and then drying and roll-pressing the same.

For example, the carbon-based active material and the silicon-based active material may be mixed with the anode binder in a solvent to prepare an anode active material composition, and the anode active material layer 120 may be formed from the prepared anode active material composition.

For example, the above-described carbon-based active material, the first silicon-based active material, the first rubber-based binder, and the first cellulose-based binder may be mixed in a solvent to prepare a first anode active material composition, and the first anode active material composition may be applied to the anode current collector 125 and dried to form a preliminary first anode active material layer. The above-described carbon-based active material, the second silicon-based active material, the second rubber-based binder, and the second cellulose-based binder may be mixed in a solvent to prepare a second anode active material composition, and the prepared second anode active material composition may be applied to the preliminary first anode active material layer and dried to form a preliminary second anode active material layer. Thereafter, the preliminary first anode active material layer and the preliminary second anode active material layer may be roll-pressed together to form the anode active material layer 120 having a multi-layer structure including the first anode active material layer 122 and the second anode active material layer 124.

The anode active material composition may optionally further include a conductive material, a dispersant, a thickener and the like.

As the solvent, an aqueous solvent such as water, pure water, deionized water, distilled water, an aqueous hydrochloric acid solution, an aqueous sodium hydroxide solution, etc.; an alcohol solvent such as ethanol, isopropanol, methanol, acetone, n-propanol, t-butanol, etc.; or a non-aqueous solvent such as N-methyl-2-pyrrolidone (NMP), dimethylformamide, dimethylacetamide, N,N-dimethylaminopropylamine, ethylene oxide, tetrahydrofuran, etc. may be used.

The conductive material may be included to facilitate electron migration between the active material particles. For example, the conductive material may include carbon-based conductive materials such as graphite, carbon black, graphene, or carbon nanotubes and/or metal-based conductive materials, including perovskite materials such as tin, tin oxide, titanium oxide, LaSrCoO₃, and LaSrMnO₃, etc.

### <Lithium secondary battery>

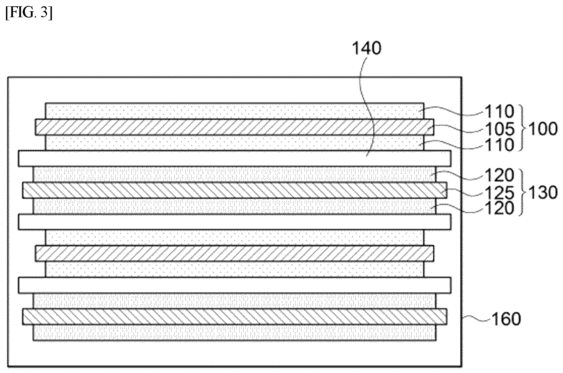

FIGS. 2 and 3 are schematic plan and cross-sectional views illustrating the lithium secondary battery according to exemplary embodiments, respectively. For example, FIG. 3 is a cross-sectional view taken along the line I-I' of FIG. 2 in the thickness direction.

Referring to FIGS. 2 and 3, the lithium secondary battery may include an electrode assembly including a cathode 100 and the anode 130. In some embodiments, the electrode assembly may further include a separation membrane 140 interposed between the cathode and the anode. The electrode assembly may be accommodated in a case 160 together with an electrolyte and be impregnated therein.

The cathode current collector 105 may include stainless steel, nickel, aluminum, titanium, or an alloy thereof. The cathode current collector may also include aluminum or stainless steel having a surface treated with carbon, nickel, titanium, or silver.

A cathode slurry layer may include a cathode active material. The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

For example, the lithium- nickel metal oxide may be represented by Formula 1 below.

[Formula 1] LiₓNi_{1-y}M_{y}O_{2+z}

In Formula 1, x, y and z may satisfy 0.9≤x≤1.2, 0≤y≤0.7, and -0.1≤z≤0.1. M may represent one or more elements selected from Na, Mg, Ca, Y, Ti, Hf, V, Nb, Ta, Cr, Mo, W, Mn, Co, Fe, Cu, Ag, Zn, B, Al, Ga, Sn or Zr.

In some embodiments, the molar ratio or concentration (1-y) of Ni in Formula 1 may be 0.8 or more, for example, may be greater than 0.8.

The chemical structure represented by Formula 1 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of the additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form a bond, and it should be understood that this case is also included within the chemical structure range represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element which contributes to the capacity/output activity of the cathode active material together with Co or Mn like Al.

For example, the cathode active material may be dispersed in a solvent to prepare a cathode slurry. The cathode slurry may be coated on the cathode current collector 105, and then dried and roll-pressed to prepare a cathode active material layer 110 of the cathode 100. The cathode slurry may further include a binder, and optionally further include a conductive material, a thickener or the like.

Non-limiting examples of the solvent used in the preparation of the cathode slurry may include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), poly(vinylidene fluoride-co-hexafluoropropylene), polyacrylonitrile, polymethyl methacrylate, acrylonitrile butadiene rubber (NBR), polybutadiene rubber (BR), styrene-butadiene rubber (SBR) and the like. In one embodiment, a PVDF-based binder may be used as the cathode binder.

The conductive material may be added to enhance the conductivity of the cathode slurry layer and/or the mobility of lithium ions or electrons. For example, the conductive material may include carbon-based conductive materials such as graphite, carbon black, acetylene black, Ketjen black, graphene, carbon nanotubes (CNTs), vapor-grown carbon fibers (VGCFs), carbon fibers, and/or metal-based conductive materials, including perovskite materials such as tin, tin oxide, titanium oxide, LaSrCoO₃, and LaSrMnO₃.

As the thickener, for example, carboxymethyl cellulose (CMC) may be used.

The anode 130 may use an anode including the above-described anode current collector, the first anode active material layer, and the second anode active material layer.

The separation membrane 140 may be interposed between the cathode 100 and the anode 130. The separation membrane may prevent an electrical short-circuit between the cathode and the anode, and maintain a flow of ions therethrough.

The separation membrane 140 may include a porous polymer film or a porous nonwoven fabric. For example, the porous polymer film may include an ethylene homopolymer, a propylene homopolymer, an ethylene/butene copolymer, an ethylene/hexene copolymer, an ethylene/methacrylate copolymer and the like. The porous nonwoven fabric may include glass fiber having a high melting point, polyethylene terephthalate fiber or the like.

The separation membrane 140 may also include a ceramic-based material. For example, inorganic particles may be coated on the polymer film or dispersed within the polymer film to improve heat resistance.

According to exemplary embodiments, an electrode cell may be defined by the cathode 100, the anode 130 and the separation membrane 140, and a plurality of electrode cells may be stacked to form, for example, a jelly roll-type electrode assembly 150. For example, the electrode assembly 150 may be formed by winding, stacking, or folding the separation membrane 140.

In one embodiment, the electrode assembly may be formed by repeatedly stacking the cathode 100, the anode 130 and the separation membrane 140, with the respective layers being cut or separated from each other.

For example, electrode tabs (a cathode tab and an anode tab) protrude from the cathode current collector 105 and the anode current collector 125, respectively, and may extend to one side of the case 160. The electrode tabs may be fused together with the one side of the case to form electrode leads (a cathode lead 107 and an anode lead 127) that extend or are exposed to outside of the case.

For example, a pouch-type case, a prismatic case, a cylindrical case, or a coin-type case, etc. may be used as the case.

The electrode assembly 150 may be accommodated in the case 160 together with an electrolyte to define a lithium secondary battery. According to exemplary embodiments, a non-aqueous electrolyte may be used as the electrolyte.

The non-aqueous electrolyte may include a lithium salt of an electrolyte and an organic solvent. The lithium salt is represented by, for example, Li⁺X⁻, and as an anion (X⁻) of the lithium salt, F, Cl⁻, Br, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

The organic solvent may include an organic compound that has sufficient solubility with respect to the lithium salt and the additive, and is electrochemically stable without exhibiting reactivity in the battery. For example, the organic solvent may include at least one of a carbonate solvent, an ester solvent, an ether solvent, a ketone solvent, an alcohol solvent and an aprotic solvent. As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluoro phosphate, etc.

The borate compound may include lithium bis(oxalate) borate, etc.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode 100 and the anode 130 in place of the above-described separation membrane.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

Hereinafter, experimental examples including specific examples and comparative examples are proposed to facilitate understanding of the present invention. However, the following examples are only given for illustrating the present invention and are not intended to limit the appended claims. It will be apparent to those skilled in the art that various alterations and modifications are possible within the scope and spirit of the present invention, and such alterations and modifications are duly included in the appended claims.

### Example

### (1) Preparation of anode

A first anode active material composition was prepared by mixing 89.925 wt% of artificial graphite (D50: 20 µm) as a graphite-based active material, 6 wt% of a silicon-carbon composite (Si/C), 0.15 wt% of single-walled carbon nanotubes (SWCNTs) as a conductive material, 0.225 wt% of carbon nanotubes (CNTs) as a dispersant, and 1.3 wt% of CMC and 2.4 wt% of SBR as binders.

A second anode active material composition was prepared by mixing 81.725 wt% of artificial graphite (D50: 20 µm) as a graphite-based active material, 16 wt% of a silicon-carbon composite (Si/C), 0.15 wt% of single-walled carbon nanotubes (SWCNTs) as a conductive material, 0.225 wt% of carbon nanotubes (CNTs) as a dispersant, and 1.9 wt% of a binder composed of CMC and SBR at a weight ratio of 1.3:0.6.

Thereafter, the first anode active material composition and the second anode active material composition were sequentially coated on one surface of a copper foil current collector having a thickness of 8 µm, and dried and roll-pressed to sequentially form a first anode active material layer and a second anode active material layer on the current collector.

### (2) Manufacture of cathode and lithium secondary battery

A slurry was prepared by mixing 98.08 wt% of Li[Ni_{0.88}Co_{0.1}Mn_{0.02}]O₂ as a cathode active material (66.86 wt% polycrystalline and 29.42 wt% single-crystal), 0.6 wt% of MWCNTs as a conductive material, 0.12 wt% of CNTs as a conductive material dispersant, and 1.2 wt% polyvinylidene fluoride (PVdF) as a binder. The slurry was uniformly applied to an aluminum foil having a thickness of 12 µm, and vacuum dried to fabricate a cathode for a secondary battery.

The cathode and the anode were respectively notched into a predetermined size and stacked, then an electrode cell was formed by interposing a separator (polyethylene, thickness: 13 µm) between the cathode and the anode. Thereafter, tap parts of the cathode and the anode were welded, respectively. The assembly of the welded cathode/separator/anode was placed into a pouch, and three sides of the pouch were sealed, leaving one side open for electrolyte injection. At this time, a portion having the electrode tab was included in the sealing part. An electrolyte was injected through the remaining side except for the sealing parts, and the remaining side was sealed, followed by allowing it to be impregnated for 12 hours or more, to manufacture a lithium secondary battery.

A solution, prepared by dissolving 1.1 M LiPF₆ in a mixed solvent of EC/EMC (25/75; volume ratio), and further adding 8 wt% of fluoroethylene carbonate (FEC), 0.5 wt% of 1,3-propene sultone (PRS), and 1.0 wt% of 1,3-propane sultone (PS), was used as the electrolyte.

Then, heat press pre-charging was performed on the lithium secondary battery for 60 minutes at a current corresponding to an average of 0.5 C. After stabilization for 12 hours or more, degassing was performed, followed by aging for 24 hours or more. Thereafter, formation charging and discharging was performed (charging conditions: CC-CV 0.25C 4.2V 0.05C CUT-OFF, discharging conditions: CC 0.25C 2.5V CUTOFF).

Subsequently, standard charging and discharging was performed (charging conditions: CC-CV 0.33C 4.2V 0.05C CUT-OFF, discharge conditions: CC 0.33 C 2.5 V CUT-OFF).

### Examples and Comparative Examples

Anodes and lithium secondary batteries were manufactured in the same manner as in the above example, except that the contents of the binders included in the first anode active material layer and the second anode active material layer were changed as shown in Table 1 below.

In addition, anodes and lithium secondary batteries were manufactured in the same manner as in the above example, except that the types and contents of the silicon-based active materials included in the first anode active material layer and the second anode active material layer were changed as shown in Table 2 below.

**[TABLE 1]**

| Classification | First anode active material layer (wt%) | | | Second anode active material layer (wt%) | | | Total content (wt%) | | |
|---|---|---|---|---|---|---|---|---|---|
| | CMC | SBR | CMC/ SBR | CMC | SBR | CMC/ SBR | CMC | SBR | CMC/ SBR |
| Example 1 | 1.3 | 2.4 | 0.54 | 1.3 | 0.6 | 2.17 | 1.3 | 1.5 | 0.87 |
| Example 2 | 1 | 2.4 | 0.42 | 1.3 | 0.6 | 2.17 | 1.15 | 1.5 | 0.77 |
| Example 3 | 1.3 | 2.4 | 0.54 | 1 | 0.6 | 1.67 | 1.15 | 1.5 | 0.77 |
| Example 4 | 0.7 | 2.4 | 0.29 | 1.3 | 0.6 | 2.17 | 1 | 1.5 | 0.67 |
| Example 5 | 1.6 | 2.4 | 0.67 | 1.3 | 0.6 | 2.17 | 1.45 | 1.5 | 0.97 |
| Example 6 | 1.3 | 2 | 0.65 | 1.3 | 0.6 | 2.17 | 1.3 | 1.3 | 1.00 |
| Example 7 | 1.3 | 2.4 | 0.54 | 0.7 | 0.6 | 1.17 | 1 | 1.5 | 0.67 |
| Example 8 | 1.3 | 2 | 0.65 | 1 | 0.4 | 2.50 | 1.15 | 1.2 | 0.96 |
| Example 9 | 1 | 2.4 | 0.42 | 1 | 0.6 | 1.67 | 1 | 1.5 | 0.67 |
| Comparative Example 1 | 1.3 | 0.6 | 2.17 | 1.3 | 2.4 | 0.54 | 1.3 | 1.5 | 0.87 |
| Comparative Example 2 | 1.3 | 1.5 | 0.87 | 1.3 | 1.5 | 0.87 | 1.3 | 1.5 | 0.87 |

**[TABLE 2]**

| Classification | First anode active material layer (wt%) | | Second anode active material layer (wt%) | | Total content (wt%) | |
|---|---|---|---|---|---|---|
| | Si/C | SiOx | Si/C | SiOx | Si/C | SiOx |
| Example 10 | 6 | 0 | 16 | 0 | 11 | 0 |
| Example 11 | 8 | 0 | 16 | 0 | 12 | 0 |
| Example 12 | 12 | 0 | 16 | 0 | 14 | 0 |
| Example 13 | 2 | 0 | 16 | 0 | 9 | 0 |
| Example 14 | 6 | 0 | 20 | 0 | 13 | 0 |
| Example 15 | 6 | 0 | 24 | 0 | 15 | 0 |
| Example 16 | 6 | 0 | 12 | 0 | 9 | 0 |
| Example 17 | 0 | 6 | 0 | 16 | 0 | 11 |
| Example 18 | 6 | 0 | 0 | 16 | 3 | 8 |
| Example 19 | 0 | 6 | 16 | 0 | 8 | 3 |
| Example 20 | 16 | 0 | 6 | 0 | 11 | 0 |
| Example 21 | 11 | 0 | 11 | 0 | 11 | 0 |
| Comparative Example 3 | 0 | 0 | 22 | 0 | 11 | 0 |

### Experimental Example

### (1) Evaluation of fast-charging cycle life characteristics

The lithium secondary batteries manufactured according to the examples and comparative examples were charged at C-rates of 2.5C/2.25C/2.0C/1.75C/1.5C/1.25C/1.0C according to the step-charging method to reach DOD72% within 25 minutes, and then discharged at 1/3C. The charging and discharging process was set to be one cycle, and fast-charging cycle life characteristics were evaluated by repeating the cycles. 150 and 300 cycles were performed while having a rest time of 10 minutes between charge and discharge cycles, the fast-charging capacity retention rate was measured, respectively.

### (2) Evaluation of room-temperature (25°C) cycle life characteristics

The lithium secondary batteries manufactured according to the examples and comparative examples were evaluated for cycle life characteristics under general charging conditions in the DOD94% (SOC4%-98%) range while maintaining the temperature at 25°C in a chamber. The batteries were charged to a voltage corresponding to SOC 98% at 0.3C under constant current/constant voltage (CC/CV) conditions, and then the charging was cut off at 0.05C. Thereafter, the batteries were discharged to a voltage corresponding to SOC 4% at 0.3C under constant current (CC) conditions, and the discharge capacity was measured. This process was repeated for 200 cycles, and then the discharge capacity retention rate was measured to evaluate the room-temperature cycle life characteristics of each battery.

**[TABLE 3]**

| Classification | Fast-charging capacity retention (%) (300 cycles) | Room-temperature (25°C) discharging capacity retention rate (%) (200 cycles) |
|---|---|---|
| Example 1 | 94 | 96 |
| Example 2 | 94 | 96 |
| Example 3 | 94 | 96 |
| Example 4 | 92 | 94 |
| Example 5 | 90 | 94 |
| Example 6 | 91 | 93 |
| Example 7 | 90 | 92 |
| Example 8 | 91 | 93 |
| Example 9 | 92 | 94 |
| Comparative Example 1 | 80 | 90 |
| Comparative Example 2 | 88 | 92 |

**[TABLE 4]**

| Classification | Fast-charging capacity retention (%) (300 cycles) | Room-temperature (25°C) discharging capacity retention rate (%) (200 cycles) |
|---|---|---|
| Example 10 | 94 | 96 |
| Example 11 | 91 | 93 |
| Example 12 | 86 | 88 |
| Example 13 | 96 | 97 |
| Example 14 | 90 | 92 |
| Example 15 | 83 | 85 |
| Example 16 | 94 | 97 |
| Example 17 | 94 | 90 |
| Example 18 | 94 | 90 |
| Example 19 | 94 | 92 |
| Example 20 | 88 | 96 |
| Example 21 | 90 | 96 |
| Comparative Example 3 | 94 | 91 |

As shown in Tables 3 and 4 above, in the case of lithium secondary batteries according to the examples, where the weight ratio of the first cellulose-based binder to the first rubber-based binder was lower than the weight ratio of the second cellulose-based binder to the second rubber-based binder, the fast-charging capacity retention rate and the room-temperature charging capacity retention rate were improved.

In addition, in the case of lithium secondary batteries according to the examples, where the content of the first silicon-based active material was lower than the content of the second silicon-based active material, the fast-charging capacity retention rate was improved.

In the case of Comparative Example 1 or Comparative Example 2, where the weight ratio of the first cellulose-based binder to the first rubber-based binder was greater than or equal to the weight ratio of the second cellulose-based binder to the second rubber-based binder, the fast-charging capacity retention rate and the room-temperature cycle life characteristics were significantly degraded.

In the case of Example 4, where the content ratio of the first cellulose-based binder to the first rubber-based binder in the first anode active material layer was less than 0.3, the fast-charging capacity retention rate and the room-temperature charging capacity retention rate were slightly reduced.

In the case of Examples 5 and 6, where the content ratio of the first cellulose-based binder to the first rubber-based binder in the first anode active material layer was greater than 0.6, the fast-charging capacity retention rate was relatively degraded.

In the case of Example 7, where the content ratio of the second cellulose-based binder to the second rubber-based binder in the second anode active material layer was less than 1.2, the fast-charging capacity retention rate and the room-temperature charging capacity retention rate were relatively degraded.

In the case of Example 8, where the content ratio of the second cellulose-based binder to the second rubber-based binder in the second anode active material layer was greater than 2.4, the fast-charging capacity retention rate and the room-temperature charging capacity retention rate were relatively degraded.

In the case of Example 9, where the content ratio of the cellulose-based binder to the rubber-based binder based on the total content of the first anode active material layer and the second anode active material layer was less than 0.7, the fast-charging capacity retention rate and the room-temperature charging capacity retention rate were slightly reduced.

In the case of Example 12, where the content of the first silicon-based active material in the first anode active material layer was 12 wt% or more, the fast-charging capacity retention rate and the room-temperature charging capacity retention rate were reduced.

In the case of Example 15, where the content of the second silicon-based active material in the second anode active material layer was 24 wt% or more, the fast-charging capacity retention rate and the room-temperature charging capacity retention rate were reduced.

In the case of Examples 17 to 19, where silicon oxide (SiOx, 0<x<2) was used instead of silicon-carbon composite (Si/C) in the first anode active material layer or the second anode active material layer, the room-temperature charging capacity retention rate was reduced.

In the case of Example 20 or Example 21, where the content of the second silicon-based active material was lower than or equal to the content of the first silicon-based active material, the fast-charging capacity retention rate was reduced.

In the case of Comparative Example 3, where no silicon-based active material was included in one of the layers, the room-temperature charging capacity retention rate was reduced.

### [Description of Reference Numerals]

100: Cathode
105: Cathode current collector
107: Cathode lead
110: Cathode active material layer
120: Anode active material layer
122: First anode active material layer
124: Second anode active material layer
125: Anode current collector
127: Anode lead
130: Anode
140: Separation membrane
150: Electrode assembly
160: Case

## Claims

1. An anode for a lithium secondary battery comprising:
an anode current collector;
a first anode active material layer which is disposed on at least one surface of the anode current collector, and comprises a first silicon-based active material and a first binder comprising a first rubber-based binder and a first cellulose-based binder; and
a second anode active material layer which is disposed on the first anode active material layer, and comprises a second silicon-based active material and a second binder comprising a second rubber-based binder and a second cellulose-based binder,
wherein a weight ratio of the first cellulose-based binder to the first rubber-based binder in the first binder is lower than a weight ratio of the second cellulose-based binder to the second rubber-based binder in the second binder.

2. The anode for a lithium secondary battery according to claim 1, wherein a content of the first rubber-based binder based on the total weight of the first binder is greater than or equal to a content of the first cellulose-based binder based on the total weight of the first binder.

3. The anode for a lithium secondary battery according to claim 1 or 2, wherein the weight ratio of the first cellulose-based binder to the first rubber-based binder in the first binder is 0.7 or less.

4. The anode for a lithium secondary battery according to any one of claims 1 to 3, wherein the weight ratio of the first cellulose-based binder to the first rubber-based binder in the first binder is 0.3 to 0.6.

5. The anode for a lithium secondary battery according to any one of claims 1 to 4, wherein a content of the second rubber-based binder based on the total weight of the second binder is lower than a content of the second cellulose-based binder based on the total weight of the second binder.

6. The anode for a lithium secondary battery according to any one of claims 1 to 5, wherein the weight ratio of the second cellulose-based binder to the second rubber-based binder in the second binder is 1.0 or more.

7. The anode for a lithium secondary battery according to any one of claims 1 to 6, wherein the weight ratio of the second cellulose-based binder to the second rubber-based binder in the second binder is 1.2 to 2.4.

8. The anode for a lithium secondary battery according to any one of claims 1 to 7, wherein the weight ratio of the first and second cellulose-based binders to the first and second rubber-based binders based on the total weight of the first binder and the second binder is 0.77 to 0.87.

9. The anode for a lithium secondary battery according to any one of claims 1 to 8, wherein the first rubber-based binder and the second rubber-based binder comprise at least one rubber-based binder selected from styrene-butadiene rubber (SBR), acrylonitrile-butadiene rubber, hydrous-styrene-butadiene rubber, hydrous-acrylonitrile-butadiene rubber, and styrene-isoprene rubber, and
the first cellulose-based binder and the second cellulose-based binder comprise at least one cellulose-based binder selected from carboxymethyl cellulose (CMC), starch, and hydroxy propyl cellulose.

10. The anode for a lithium secondary battery according to any one of claims 1 to 9, wherein the first silicon-based active material and the second silicon-based active material each comprise a silicon-carbon composite.

11. The anode for a lithium secondary battery according to any one of claims 1 to 10, wherein a content of the first silicon-based active material based on the total weight of the first anode active material layer is lower than a content of the second silicon-based active material based on the total weight of the second anode active material layer.

12. The anode for a lithium secondary battery according to any one of claims 1 to 11, wherein the content of the first silicon-based active material based on the total weight of the first anode active material layer is 3 wt% to 10 wt%.

13. The anode for a lithium secondary battery according to any one of claim 1 to 12, wherein the content of the second silicon-based active material based on the total weight of the second anode active material layer is 13 wt% to 20 wt%.

14. The anode for a lithium secondary battery according to any one of claims 1 to 13, wherein the total content of the first and second silicon-based active materials based on the total weight of the first anode active material layer and the second anode active material layer is 8 wt% or more.

15. A lithium secondary battery comprising:
the anode for a lithium secondary battery according to any one of claims 1 to 14; and
a cathode disposed opposite to the anode for a lithium secondary battery.
